# EUROPÄISCHE PATENTSCHRIFT

(11) **EP 1 057 289 B1**
(45) Veröffentlichungstag und Bekanntmachung des Hinweises auf die Patenterteilung: **02.05.2003**
(21) Anmeldenummer: 98955353.2
(22) Anmeldetag: 30.09.1998
(51) Int. Cl.: H04B 10/00, H04B 10/08, H04B 10/24

(54) **VERFAHREN ZUR ÜBERTRAGUNG VON OPTISCHEN NUTZSIGNALEN UND OPTISCHES LEITUNGSNETZWERK**
METHOD FOR TRANSFERRING UTILITY OPTICAL SIGNALS AND OPTICAL-LINE NETWORK
PROCEDE DE TRANSFERT DE SIGNAUX UTILES OPTIQUES, ET RESEAU DE LIGNES OPTIQUES

(30) Priorität: 20.02.1998 DE 19807069
(43) Veröffentlichungstag der Anmeldung: 06.12.2000
(73) Patentinhaber: ROBERT BOSCH GMBH, 70442 Stuttgart (DE)
(72) Erfinder: KOEPPEN, Jan, D-31139 Hildesheim (DE); NEUMANN, Guenter, D-31162 Salzdetfurth (DE); TILTMANN, Helmut, D-48282 Emsdetten (DE)
(86) Internationale Anmeldenummer: DE9802885
(87) Internationale Veröffentlichungsnummer: WO99043106

(56) Entgegenhaltungen:
- EP-A- 0 721 275
- WO-A-97/09803
- WO-A-97/24822
- BISCHOFF M ET AL: "OPERATION AND MAINTENANCE FOR AN ALL-OPTICAL TRANSPORT NETWORK" IEEE COMMUNICATIONS MAGAZINE, Bd. 34, Nr. 11, November 1996, Seiten 136-142, XP000636137

## Beschreibung

Die vorliegende Erfindung betrifft ein Verfahren zur Übertragung von optischen Nutzsignalen und ein optisches Leitungsnetzwerk.

Die EP-A-0721275 beschreibt ein Verfahren, bei dem Prüfsignale ausgesendet werden, die eine bestimmte Wellenform aufweisen und die nach ihrer Übertragung getestet werden, um die Qualität des Übertragungsweges festzustellen. Dabei führt jede Störung des übertragenden Signals zu einer Fehlermeldung und gegebenenfalls zu einer Umschaltung von Regel- zu Ersatzabschnitten.

Optische Glasfaserleitungen haben sich zur verlustarmen Übertragung von Informationen mit einer hohen Informationsdichte als besonders geeignet herausgestellt. Üblicherweise in elektrischer Form vorliegende Informationssignale werden beispielsweise mit Leuchtdioden oder Laserdioden in optische Signale umgewandelt und in eine entsprechende optische Faserleitung eingekoppelt. An geeigneten Stellen des Leitungsnetzes wird das Signal beispielsweise mit einer Fotodiode detektiert und wieder in ein elektrisches Signal umgewandelt, als das es in üblicher Form weiterverarbeitet werden kann. Diese Signalübertragung eignet sich für Überwindung großer Entfernungen. In geeigneten Abständen sind in die entsprechenden Leitungen Verstärker und/oder Regeneratoren eingesetzt, die sicherstellen sollen, daß das Signal in gut empfangbarer Form an der beispielsweise durch eine Fotodiode gebildeten Signalsenke ankommt. Wie bei den elektrischen Netzen ist es erforderlich, Knoten vorzusehen, durch die Signale an einen bestimmten gewünschten Empfänger geleitet werden und durch die es ermöglicht wird, für einen Haupt-Leitungsweg einen Ersatzweg vorzusehen, falls die Übertragung auf dem Haupt-Leitungsweg gestört werden sollte. Durch entsprechend vorgesehene Bytes in einem Overhead des zu übertragenden Nutzsignals können auch automatische Ersatzleitungsschaltungen vorgenommen werden. Nachteilig an diesem Verfahren ist, daß die Schaltung eines Ersatzweges nur innerhalb eines festgelegten Übertragungsstandards für die Nutzsignale möglich ist und daß in dem bekannten System eine optoelektronische Wandlung des Signals an den Enden der mit einem Ersatzweg geschützten Strecke erforderlich ist. Diese Enden fallen nicht notwendigerweise mit den Quellen/Senken der Nutzsignale zusammen.

Durch die EP 0 440 276 B1 ist es bekannt, außerhalb des Nutzsignalbands dem Nutzsignal ein Kommunikationssignal mittels optischen Kopplern hinzuzufügen. Damit können Steuer- und Befehlssignale zwischen Knoten der Übertragungseinrichtung übertragen werden. Während die Übertragung der Nutzsignale in dem sogenannten "dritten Fenster" erfolgt, ist für die Übertragung der Kommunikationssignale das "zweite Fenster" vorgesehen worden. Die "Fenster" ergeben sich aus den Dämpfungseigenschaften des Glasfasermaterials für bestimmte Wellenlängenbereiche. In dem "dritten Fenster" ist die Dämpfung minimal, während das "zweite Fenster" durch ein anderes Dämpfungsminimum gebildet ist, in dem jedoch die niedrigen Dämpfungswerte des "dritten Fensters" nicht erreicht werden. Für Servicekommunikationen an dem Leitungsnetz steht somit ein eigenes Übertragungsband zur Verfügung.

Ein nicht vorveröffentlichtes Konzept der Anmelderin sieht vor, auf den aneinander anschließenden Leitungswegen eines optischen Pfades zwischen Signalquelle und -senke und ggf. auf einzelnen Leitungsabschnitten der Leitungswege bidirektionale Prüfsignale zu übermitteln, deren Empfang oder Nichtempfang als Indikator für eine Leitungsstörung auf einem Leitungsabschnitt gewertet wird. Durch eine Unterbindung der Aussendung des Prüfsignals in der Gegenrichtung kann stromaufwärts in Übertragungsrichtung ein Alarm gegeben oder eine Umschaltung eines Knotens auf einen Ersatzweg ausgelöst werden. Die auf diese Weise mögliche dezentrale Umschaltung auf Ersatz-Leitungswege läßt sich um Größenordnungen schneller durchführen als über eine zentrale Steuerung. Dieser Vorteil ist allerdings mit dem Problem verknüpft, daß bereits geringfügige, vorhersehbare Störungen Umschaltvorgänge auslösen und dadurch Ersatz-Leitungswege beaufschlagen, die gar nicht benötigt werden oder gar nicht hilfreich sein können, so daß die Ersatz-Leitungswege besser für eine Kommunikation mit niedrigerer Priorität oder als Schutzmaßnahme für einen anderen Regel-Leitungsweg verwendet werden sollten. Insbesondere wird auch nicht verhindert, daß Umschaltvorgänge auf einem optischen Pfad stattfinden, der aufgrund einer detektierten Störung sowieso nicht mehr brauchbar ist, so daß unnötige Umschaltvorgänge und damit eine unnötige Belegung von Ersatz-Leitungswegen stattfindet.

Der vorliegenden Erfindung liegt daher die Problemstellung zugrunde, eine schnelle Umschaltung auf Ersatz-Leitungswege zu ermöglichen, zugleich jedoch fruchtlose Umschaltvorgänge zu vermeiden.

Zur Lösung dieses Problems ist erfindungsgemäß ein Verfahren zur optischen Übertragung nach Anspruch 1 Vorgesehen.

Das erfindungsgemäße Verfahren besteht somit darin, daß Prüfsignale wenigstens zweier Arten erzeugt werden und daß die Umschaltung nicht nur von dem Fehlen eines Prüfsignals - als Indikator einer Störung - abhängt sondern auch von der Art des vorher empfangenen Prüfsignals. Dadurch ermöglicht die Erfindung, gezielt Umschaltvorgänge zu vermeiden, indem über einen Leitungsweg Prüfsignale der zweiten Art übertragen werden, weil diese Prüfsignale der zweiten Art Schutzmaßnahmen, wie Umschaltungen, auf dem Leitungsweg verhindern. Durch die Übertragung eines Prüfsignals der zweiten Art können beispielsweise Umschaltvorgänge in einem optischen Pfad vermieden werden, der aufgrund einer bereits detektierten Störung aktuell nicht mehr benutzbar ist. Ferner ermöglicht die Erfindung von einer übergeordneten Steuerung die Einspeisung des Prüfsignals der zweiten Art vorzunehmen und so für vorhersehbare Störungserscheinungen, beispielsweise bei der Zuschaltung eines weiteren Nutzsignalkanals im Netz, die erfahrungsgemäß kurzfristige Störsignale in den vorhandenen Nutzsignalkanälen verursacht, zu vermeiden.

Die Erfindung ermöglicht somit die schnelle dezentrale Umschaltung von Koppelknoten bei gleichzeitiger Kontrolle der Sinnhaftigkeit einer solchen Umschaltung und gleichzeitiger Vermeidung von fruchtlosen Umschaltungen.

Für die Durchführung der Erfindung werden zweckmäßigerweise an den Enden jedes Leitungsabschnitts Prüfsignalknoten vorgesehen, durch den jeweils Prüfsignale empfangen und neue Prüfsignale gebildet und ausgesandt werden oder Prüfsignale lediglich weitergeleitet werden.

Dabei wird der Tatsache Rechnung getragen, daß die Prüfsignalknoten je nach der aktuellen Konfiguration eines optischen Pfades manchmal einen Leitungsabschnitt, der gleichzeitig ein Prüfsignalabschnitt ist, begrenzen und manchmal innerhalb eines Prüfsignalabschnitts keine die Prüfsignale beeinflussende Funktion ausüben sollen. In einer bevorzugten Ausführungsform der Erfindung werden die Prüfsignalknoten im wesentlichen gleich aufgebaut und durch Software als Durchgangsknoten, Einsetzknoten oder Endknoten konfiguriert. In einem Einsetzknoten werden Prüfsignale in beiden Übertragungsrichtungen empfangen, ausgewertet, neu generiert und ausgesandt. Ein Endknoten befindet sich an einer Signalsenke oder Signalquelle und ist daher nur vom Endknoten aus gesehen in einer Richtung für Empfang und Aussenden wirksam. Ein Durchgangsknoten verändert die empfangenen Prüfsignale nicht, kann aber feststellen, wenn ein Prüfsignal nicht empfangen wird, da er in diesem Fall vorzugsweise ein besonderes Prüfsignal, vorzugsweise einer dritten Art, produziert und aussendet.

Zur Vermeidung von Umschaltvorgängen auf einem wegen einer detektierten Störung nicht mehr benutzbaren optischen Pfad ist gemäß einer bevorzugten Ausführungsform der Erfindung vorgesehen, daß aus mehreren aneinander anschließenden Leitungswegen ein optischer Pfad zwischen zwei Signalquellen bzw. -senken gebildet wird und bei einer erkannten Störung auf einem Leitungsweg auf allen anderen Leitungswegen des optischen Pfades ein Prüfsignal der zweiten Art übermittelt wird.

Wenn die Prüfsignalknoten ein Prüfsignal einer dritten Art erkennen, oder wenn an dem Prüfsignalknoten überhaupt kein Prüfsignal empfangen wird, wird eine Umschaltung auf einen Ersatz-Leitungsweg nur dann vorgenommen, wenn ein Übergang von dem Prüfsignal der ersten Art zum Prüfsignal der dritten Art delektiert wird.

Die Prüfsignalknoten sind zweckmäßigerweise signalmäßig mit einer übergeordneten Steuerung verbunden, die auch die Konfiguration der Prüfsignalknoten im Einzelfall steuert. Die übergeordnete Steuerung kann dezentral durch Steuerungen der dem Prüfsignalknoten nächstgelegenen Koppelknoten gebildet werden.

Ein bevorzugtes Anwendungsgebiet der Erfindung liegt in Kommunikationsnetzen, in denen die Übertragung der optischen Nutzsignale ebenfalls bidirektional erfolgt, wobei die Übertragung der optischen Nutzsignale in den beiden Übertragungsrichtungen über separate optische Leitungsfasern erfolgen kann.

Die erfindungsgemäßen Prüfsignale werden vorzugsweise zusammen mit den in der betreffenden Richtung übertragenen Nutzsignalen übertragen.

Im allgemeinen werden auf optischen Leitungsfasern mehrere Nutzsignale im Multiplex-Verfahren, vorzugsweise im Wellenlängen-Muitipiex, übermittelt. Dabei wird vorzugsweise jedem übertragenen Nutzsignal ein eigenes Prüfsignal zugeordnet und in einem separaten Prüfsignalkanal übertragen. Die Prüfsignale werden zweckmäßigerweise elektrisch im Zeitmultiplex-Verfahren kombiniert und dann den Nutzsignalen optisch im Wellenlängenmultiplex hinzugefügt.

Zur Lösung der oben erwähnten Problemstellung dient erfindungsgemäß ein optisches Leitungsnetzwerk nach Anspruch 14.

Vorzugsweise ist dabei die Steuerung Teil des zugehörigen Koppelknotens.

Die Prüfsignalknoten sind vorzugsweise zum Aussenden dreier Arten von Prüfsignalen ausgebildet und können an den Prüfsignalempfängern vier verschiedene Zustände detektieren, nämlich den Empfang der drei Prüfsignale und einen Nichtempfang eines Prüfsignals, indem mit einem Prüfsignaldetektor z.B. ein Unterschreiten eines Pegels des Prüfsignals oder eine nicht ausreichende Flankensteilheit oder eine völlig falsche Checksumme als eine Störung detektiert und ein. entsprechendes Störungskennsignal generiert wird. Mit dem Störungskennsignal kann eine Alarmgabeeinrichtung ausgelöst werden.

Die Erfindung soll im folgenden anhand von in der Zeichnung dargestellten Ausführungsbeispielen näher erläutert werden. Es zeigen:
- Figur 1 -: eine schematische Darstellung eines optischen Pfades bestehend aus aneinander gereihten Regel-Leitungswegen mit einem Ersatz-Leitungsweg
- Figur 2 -: eine Darstellung gemäß Figur 1 für ein anderes Ausführungsbeispiel eines optischen Pfades mit Regel- und Ersatz-Leitungswegen
- Figur 3 -: eine schematische Darstellung des Prinzipaufbaus eines Prüfsignalknotens
- Figur 4 -: ein Flußdiagramm für die Bildung von Prüfsignalen für die Prüfsignalsender eines Prüfsignalknotens in Abhängigkeit von den von den Prüfsignalempfängern empfangenen Prüfsignalen.

Figur 1a zeigt ein Ausführungsbeispiel für einen optischen Pfad OP zwischen zwei Sendern/Empfängern TxRx, die jeweils mit Schaltungspunkte 1 und 6 bildenden Prüfsignalknoten LS1, LS6 verbunden sind. Ein erster Koppelknoten OCC1 ist an den Sender/Empfänger TxRx am Schaltungspunkt 1 angeschlossen. Bezüglich des dargestellten optischen Pfads weist der erste Knoten OCC1 an seinem vom Schaltungspunkt 1 abgewandten Ausgang einen Prüfsignalknoten LS2 am Schaltungspunkt 2 auf. Es schließt sich ein Leitungsweg 2-3 an, der am Schaltungspunkt 3 in einen Prüfsignaiknoten LS3 endet. Daran schließt sich ein zweiter Koppelknoten OCC2 an, der eine Verzweigung ermöglicht und zwei Anschlüsse an Leitungspunkten 4 und 7 aufweist, an denen sich Prüfsignalknoten LS4 und LS7 befinden. Der Leitungspunkt 4 bildet mit einem entfernten Leitungspunkt 5 einen Regel-Leitungsweg 4-5, der an einem Prüfsignalknoten LS5 mit einem nachfolgenden vierten Koppelknoten OCC4 endet. Dieser Koppelknoten weist einen weiteren Anschluß an einem Leitungspunkt 10 mit einem Prüfsignalknoten LS10 auf, an der ein Ersatz-Leitungsweg 7-10 endet. In den Ersatz-Leitungsweg ist dem dargestellten Ausführungsbeispiel ein dritter Koppelknoten OCC3 eingeschaltet, der beidseitig an Leitungspunkten 8 und 9 mit Prüfsignalknoten LS8, LS9 versehen ist.

Das andere Ende des vierten Koppelknotens OCC4 ist mit dem den optischen Pfad abschließenden Sender/Empfänger TxRx mit dem Prüfsignalknoten LS6 verbunden.

Figur 1b verdeutlicht die sich daraus ergebenden optischen Leitungsabschnitte 1-2, 2-3, 3-4, 4-5, 5-6, 7-8, 8-9, 9-10, wobei die Leitungsabschnitte zwischen den Leitungspunkten 7 und 10 einen Ersatz-Leitungsweg für den Regel-Leitungsweg 4-5 bilden.

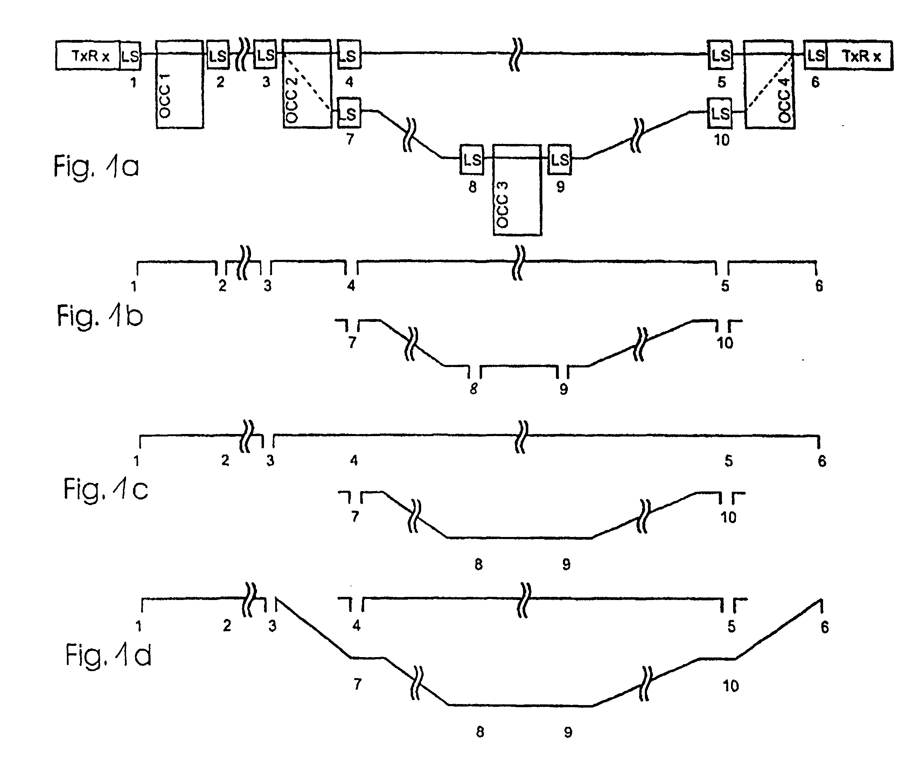

Figur 1c verdeutlicht, daß für die Überwachung dieser Leitungskonfiguration für den Fall eines funktionierenden Regelwegs 4-5 nur drei Prüfabschnitte 1-3, 3-6, 7-10 benötigt werden, so daß die Prüfsignalknoten LS2, LS4, LS5, LS8 und LS9 als Durchgangsknoten konfiguriert werden können, die ein Prüfsignal nicht bearbeiten, sondern lediglich durchleiten müssen.

Die Prüfsignalabschnitte werden mit folgenden Regeln gebildet:
- an allen Quellen und Senken S/D von Nutzsignalen beginnt und endet immer ein Prüfsignalabschnitt
- am Beginn und Ende einer passiven Übertragungsstrecke beginnt/endet immer ein Prüfsignalabschnitt
- am Beginn/Ende eines mit einem Ersatz-Leitungsweg geschützten Regel-Leitungswegs beginnt/endet immer ein Prüfsignalabschnitt. Der optische Abschnitt im Knoten am Beginn/Ende eines Prüfsignalabschnitts bildet eine Einheit mit dem Prüfsignalabschnitt der entsprechenden aktiven Übertragungsstrecke.

Alle jeweils nicht am Ende eines Prüfsignalabschnitts benötigten Prüfsignalknoten werden als Durchgangsknoten konfiguriert, d.h. das Prüfsignal wird lediglich durchgeleitet.

Wird nun auf dem Prüfabschnitt 1-3 das Fehlen eines Prüfsignals LS festgestellt, steht kein Ersatzweg zur Verfügung, so daß ein Alarm an eine zentrale Netzwerksteuerung (Telekommunication Management Network) gegeben wird. Auf den Leitungsausfall muß der Bediener der Netzwerksteuerung reagieren.

Fällt hingegen das Prüfsignal auf dem Regel-Leitungsweg 3-6 aus, werden die Koppelknoten OCC2 und OCC4 zur Umschaltung veranlaßt und die Prüfsignalknoten neu konfiguriert, so daß nunmehr die Prüfsignalknoten LS4 und LS5 zur Überprüfung der Reparatur des Prüfabschnitts 4-5 als Einsatzknoten konfiguriert werden, während die bisher als Einsatzknoten wirksamen Prüfsignalknoten LS7 und LS10 als Durchgangsknoten konfiguriert werden können. Der Prüfabschnitt 3-6 bildet jetzt den aktiven Ersatz-Leitungsweg, während der Regel-Leitungsweg 4-5 nicht mehr benutzt wird.

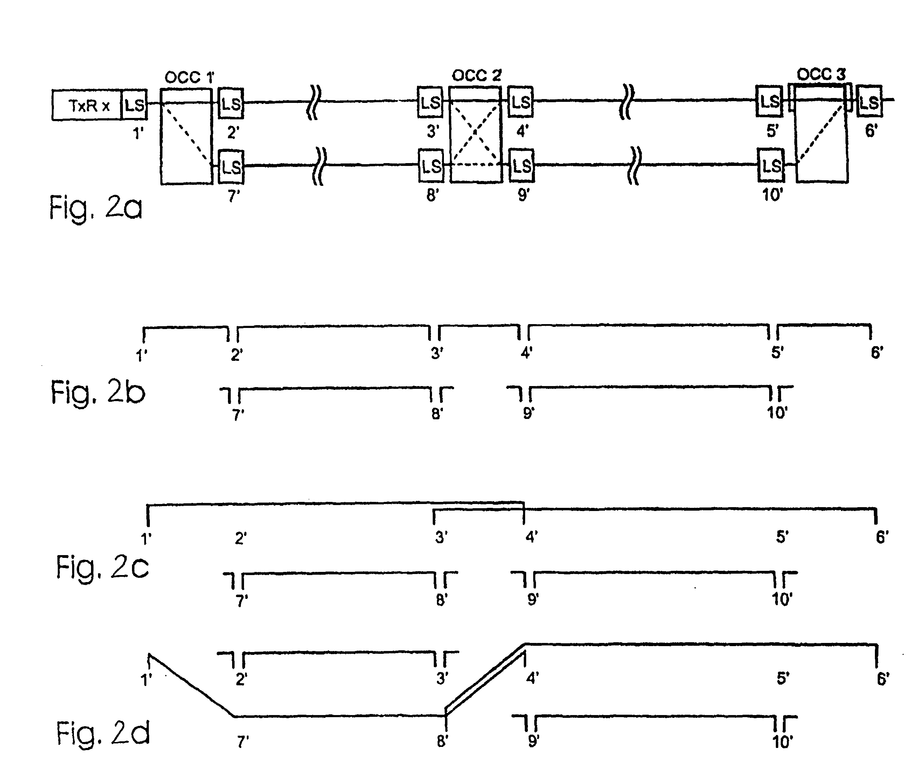

Figur 2a zeigt ein anderes Ausführungsbeispiel für einen optischen Pfad OP zwischen zwei Sendern/Empfängern TxRx mit Prüfsignalknoten LS1', LS6' an Leitungspunkten 1', 6'. Ein erster Koppelknoten OCC1' bildet eine Verzweigung zu zwei Leitungspunkten 2', 7' mit zugehörigen Prüfsignalknoten LS2', LS7'. Ein zweiter Koppelknoten OCC2' ist als Kreuzweiche zwischen Regel-Leitungswegen 1'-4', 3'-6' und Ersatz-Leitungswegen 7'-8', 9'-10' angeordnet und weist vier Anschlüsse an den Schaltungspunkten 3', 4', 8', 9' mit Prüfsignalknoten LS3', LS4', LS8', LS9' auf.

Ein dritter Koppelknoten OCC3' führt die beiden Leitungswege, die an Leitungspunkten 5', 10' mit Prüfsignalknoten LS5', LS10' ankommen, zum Leitungspunkt 6' zusammen.

Figur 2b zeigt schematisch die sich daraus ergebenden optischen Leitungsabschnitte 1'-2', 2'-3', 3'-4', 4'-5', 5'-6', 7'-8', 9'-10'.

Figur 2c zeigt Prüfabschnitte der Anordnung gemäß Figur 2a für den ungestörten Fall.

Aus den obigen Regeln ergibt sich, daß ein Leitungsabschnitt zu mehreren Prüfabschnitten gehören kann, wie sich dies auch in der Figur 2c für den Leitungsabschnitt 3'-4' ergibt. Die Prüfabschnitte in Figur 2c sind die Leitungsabschnitte 1'-4', 3'-6', 7'-8' und 9'-10'. Die aktive Übertragung findet auf den Leitungsabschnitten 1'-2'-3'-4'-5'-6' statt. Die Leitungsabschnitte 7'-8' und 9'-10 stellen zunächst passive Ersatz-Leitungswege dar.

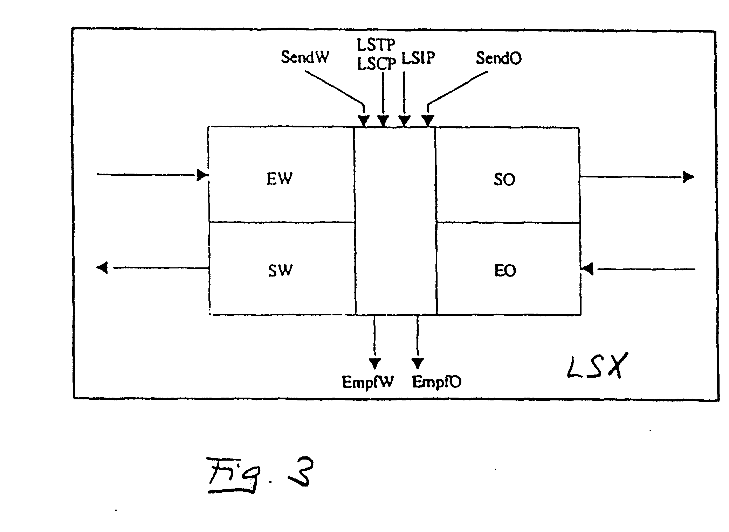

Wird durch Ausfall des Prüfsignals eine Störung auf dem Regel-Leitungsweg 1'-4' festgestellt, wird eine Umschaltung veranlaßt, die in Figur 3d dargestellt ist. Die Strecke 2'-3' wird passiv geschaltet und die aktive Übertragung findet nunmehr auf dem Ersatz-Leitungsweg 7'-8' vom Schaltungspunkt 1' zum Leitungspunkt 4' statt. Der andere Ersatz-Leitungsweg 9'-10' wird in diesem Fall nicht als Ersatz-Leitungsweg benötigt, also nicht aktiv gemacht. Die Prüfabschnitte laufen nun von 1' zu 4' über die Leitungspunkte 7' und 8' einerseits und von 8' über 4', 5' zum Leitungspunkt 6' andererseits. Ferner werden die passiven Wege 2'-3' und 9'-10' auf Erhalt bzw. Wiedererreichen der Funktionalität überprüft.

Aus Figur 2d wird deutlicht, daß mit der vorliegenden Erfindung nur ein wirklich benötigter Ersatz-Leitungsweg aktiv geschaltet wird und daß diese Aktivschaltung durch die dargestellte Bildung von Prüfabschnitten und Überprüfung des Prüfsignals an den Enden der Prüfabschnitte erreicht wird. Der Vergleich der Figuren 2c und d verdeutlicht ferner, daß wiederum im Normalfall als Einsatzknoten fungierende Prüfsignalknoten (LS7', LS8') als Durchgangsknoten geschaltet werden und daß ursprünglich als Durchgangsknoten geschaltete Prüfsignalknoten LS2' als Einsatzknoten geschaltet werden, wenn eine Neukonfiguration, z.B. gemäß Figur 2d gegenüber Figur 2c, erforderlich wird. Für die auf überlappenden Prüfabschnitten liegenden Prüfsignalknoten LS3', LS4' kann in einer Richtung eine Konfiguration als Durchgangsknoten und in der anderen Richtung als Einsetzknoten erfolgen.

Durch die vorliegende Erfindung wird sichergestellt, daß eine Umschaltung auf einen Ersatz-Leitungsweg nur dann stattfindet, wenn eine solche Umschaltung auch sinnvoll sein kann. Wenn beispielsweise in der Konfiguration gemäß Figur 1a eine Störung auf dem Leitungsweg 2-3 festgestellt wird, wird der gesamte optische Pfad 1-6 unbrauchbar. Sollte anschließend noch eine Störung auf dem Leitungsweg 4-5 festgestellt werden, wäre eine Umschaltung auf den Ersatz-Leitungsweg 7-10 völlig sinnlos, da diese Umschaltung auch nicht zu einem benutzbaren optischen Pfad 1-6 führt. In vielen Konfigurationen wird der Ersatz-Leitungsweg 7-10 ganz oder teilweise für andere Zwecke benutzt, beispielsweise um eine Kommunikation mit einer geringeren Priorität durchzuführen oder die Sicherung eines anderen Regel-Leitungsweges mit zu übernehmen (Shared Protection). Diese Zweitfunktion des Ersatz-Leitungsweges 7-10 müßte unterbrochen werden, wenn die Umschaltung vom Regel-Leitungsweg 4-5 auf den Ersatz-Leitungsweg 7-10 vorgenommen wird, obwohl hierdurch für die Übertragung auf dem optischen Pfad 1-6 nichts gewonnen wird. Zur Vermeidung derartiger unnötiger Umschaltungen werden von den Prüfsignalknoten LSX Prüfsignale wenigstens zweier Arten, gemäß einer bevorzugten und im folgenden näher dargestellten Ausführungsform drei Arten von Prüfsignalen ausgesandt, nämlich
- LS-HOT z.B. als Bitmuster 1010
- LS-COLD z.B. als Bitmuster 0101
- LOLS alle anderen Bitmuster.

Die Prüfsignalknoten LSX sind ferner mit Prüfsignalempfängern ausgestattet, die einen Prüfsignal-Pegeldetektor beinhalten, so daß auch das Ausbleiben eines Prüfsignals - welcher Art auch immer - als ein eigener Zustand erkannt wird. Die Prüfsignalknoten LSX können daher empfangsseitig vier Zustände unterscheiden, nämlich "Prüfsignal nicht vorhanden" sowie "Prüfsignal empfangen", und zwar entsprechend der drei möglichen Arten des empfangenen Prüfsignals.

Die Ausnutzung der Prüfsignale für die Steuerung von Umschaltungen oder sonstiger Schutzmaßnahmen erfolgt erfindungsgemäß mit den nachstehend erläuterten Regeln.

Im fehlerfreien Zustand wird auf dem gesamten optischen Pfad das Prüfsignal LS-HOT übertragen. Wird innerhalb eines Leitungsabschnitts, beispielsweise Leitungsabschnitt 2-3 in Figur 1a, ein Fehler dadurch erkennt, daß beispielsweise der Prüfsignalknoten LS2 kein Prüfsignal mehr empfängt, beispielsweise bedingt durch eine Faserunterbrechung für die Übertragungsrichtung vom Prüfsignalknoten LS3 zum Prüfsignalknoten LS2, sendet der Prüfsignalknoten, der gemäß Figur 1c an sich als Durchgangsknoten konfiguriert ist, in beide Richtungen ein LOLS-Prüfsignal aus.

Wäre der Prüfsignalverlust auf dem Leitungsabschnitt 2-3 in der anderen Übertragungsrichtung aufgetreten, also vom Prüfsignalknoten LS3 erkannt worden, der als Einsetzknoten konfiguriert ist, würde dieser das LOLS-Prüfsignal nur in Rückrichtung, also in Richtung der Prüfsignalknoten LS2 und LS1 aussenden.

An den Enden des Leitungswegs 1-3, also an den Prüfsignalknoten LS1 und LS3 wird ein direkter Übergang vom Prüfsignal LS-HOT auf das Prüfsignal LOLS erkannt, so daß an diesen Stellen eine Umschaltung auf einen Ersatz-Leitungsweg vorgenommen werden könnte, wenn ein solcher Ersatz-Leitungsweg vorhanden wäre (wie dies im Falle des Ausführungsbeispiels gemäß Figur 2a für den Regel-Leitungsweg 2'-3' durch den Ersatz-Leitungsweg 7'-8' gegeben ist).

Aufgrund der aufgetretenen Störung in dem Leitungsweg 2-3 in dem in Figur 1a dargestellten Beispiel werden auf allen übrigen Leitungswegen 1-2, 4-5, 5-6 des optischen Pfades (die möglichen Ersatz-Leitungswege 7-8, 9-10 sind in dieser Situation nicht angeschlossen und gehören somit nicht zum aktuellen optischen Pfad 1-6) Prüfsignale der zweiten Art LS-COLD übertragen. Würde nun beispielsweise durch den Prüfsignalknoten 5 aufgrund einer Störung der Verlust des Prüfsignals detektiert werden, käme es nicht zu einer Umschaltung auf den Ersatz-Leitungsweg 7-10, da die Umschaltung nur dann bewirkt wird, wenn ein Übergang von dem Prüfsignal LS-HOT auf das Prüfsignal LOLS stattfindet, was aber wegen der Aussendung des Prüfsignals LS-COLD nicht zutreffen kann.

Die Aussendung des Prüfsignals LS-COLD, das somit eine Umschaltung auf Ersatz-Leitungswege oder andere Schutzmaßnahmen verhindert, kann auch von außen, beispielsweise von einem Koppelknotenrechner, gesteuert werden, um im Falle einer vorhersehbaren kurzfristigen Störung nicht sinnvolle Umschaltreaktionen zu vermeiden. Dies ist beispielsweise sinnvoll, wenn in einer bestehenden Netzkonfiguration ein neuer Übertragungsweg für Nutzsignale (beispielsweise ein neuer Wellenlängenkanal) aufgebaut oder ein bestehender Übertragungsweg abgebaut wird, da es hierbei zu einer kurzfristigen Störung von bestehenden Übertragungswegen kommen kann. Durch das Einspeisen der LS-COLD-Prüfsignale in den optischen Pfad werden eventuell vorhandene Ersatzwegeschaltungen "eingefroren", bis der neue Betriebszustand sicher hergestellt ist. Dadurch können auch "Kettenreaktionen" durch nacheinander erfolgende Umschaltungen vermieden werden. Ferner kann auch im Wartungsfall eine bestehende Netzkonfiguration "eingefroren" werden, ohne daß beispielsweise von einem Zentralrechner konfigurierte Schutzmechanismen abgebaut werden müßten.

Figur 3 zeigt schematisch den Aufbau eines Prüfsignalknotens für ein bidirektionales Leitungsnetz, in dem für beide Übertragungsrichtungen getrennte Leitungsfasern vorgesehen sind. Der Prüfsignalknoten LSX weist zwei Anschlußseiten (E, O) für angeschlossene Leitungsabschnitte auf. Ein Prüfsignal von der Seite E wird von einem Prüfsignalempfänger EW empfangen. Zur Seite E kann ein Prüfsignal von einem Prüfsignalsender SW ausgesandt werden. Entsprechend sind für die Anschlußseite O ein Prüfsignalempfänger EO und ein Prüfsignalsender SO vorgesehen.

In dem dargestellten Ausführungsbeispiel weist der Prüfsignalknoten LSX ferner vier Eingänge von übergeordneten Steuerungen auf. Über einen Eingang SendW kann von außen ein vom Prüfsignalsender SW auszusendendes Prüfsignal eingegeben werden. Entsprechendes gilt für einen Eingang SendO, der von außen ein über den Prüfsignalsender SO auszusendendes Prüfsignal festlegt.

An einem weiteren Eingang LSTP, LSCP wird ein Konfigurationssignal für den Prüfsignalknoten LSX eingegeben, durch das festgelegt wird, ob der Prüfsignalknoten LSX als Durchgangsknoten (LSCP) oder als Einsetzknoten (LSTP) konfiguriert wird.

Ist der Prüfsignalknoten LSX ein Endknoten eines optischen Pfades (z.B. LS1 und LS6 in Figur 1a), wird er nur für eine Seite E oder O als Endknoten (LSIP) benötigt. Diese Konfiguration wird über einen Eingang LSIP gesteuert. Die vom Prüfsignalknoten LSX empfangenen Prüfsignale werden als Prüfsignalinformation über Ausgänge EmpfW, EmpfO an eine übergeordnete Steuerung, beispielsweise einen Koppelknotenrechner, ausgegeben, so daß der Koppelknotenrechner Auswertungen zum Zwecke der Umschaltung auf Schutzmaßnahmen vornehmen kann, wobei auf EmpfO der schlechtere Zustand von SO und EO und auf EmpfW der schlechtere Zustand von SW und EW übermittelt werden.

Befindet sich der Prüfsignalknoten LSX in der Konfiguration als Durchgangsknoten (LSCP) werden die empfangenen Prüfsignale unverändert wieder ausgesandt (EW = SO; EO = SW). Lediglich wenn ein Prüfsignal nicht empfangen wird, beispielsweise am Prüfsignalempfänger EW, wird in beide Richtungen von den Prüfsignalsendern SO, SW das Signal LOLS ausgesandt.

Ist der Prüfsignalknoten LSX als Einsetzknoten (LSTP) konfiguriert, sendet er beim Ausfall des Empfangs eines Prüfsignals, beispielsweise am Prüfsignalempfänger EW nur in der entsprechenden Rückrichtung (SW) das Signal LOLS, in die andere Richtung hingegen regelmäßig das Signal (LS-COLD), es sei denn, durch ein Prüfsignal aus der anderen Richtung ist die Aussendung eines schlechteren Prüfsignals (LOLS) indiziert. Der das vom Prüfsignalsender SW ausgesandte Signal LOLS erhaltende, als Einsetzknoten (LSCP) konfigurierte Prüfsignalknoten LSX am Ende des in der anderen Übertragungsrichtung gestörten Leitungsweges sendet in W-Richtung beim Empfang von LOLS regelmäßig das Signal LS-COLD, so daß alle nicht von der Störung betroffenen Leitungswege das Signal LS-COLD in der Übertragungsrichtung W übertragen. Die Prüfsignalknoten LSX, die als Einsatzknoten (LSTP) ein Signal LS-COLD empfangen, senden in Gegenrichtung das Signal LS-HOT, wenn nicht der zugehörige Prüfsignalempfänger EW gleichzeitig einen Verlust eines Prüfsignals meldet, so daß der zugehörige Prüfsignalsender SO ein LS-COLD-Prüfsignal aussendet.

Aufgrund der Regel, daß in Rückrichtung der Prüfsignalsender SO bzw. SW grundsätzlich ein Prüfsignal höherer Ordnung (Ausfallprüfsignal ⇒ LOLS; LOLS ⇒ LS-COLD; LS-COLD ⇒ LS-HOT, sofern ein Endknoten (LSIP) vorliegt oder auf der Sendeseite LS-HOT empfangen worden ist) erlaubt ein schnelles und automatisches Wiedereinschalten der Regel-Leitungswege nach der Durchführung einer Leitungsreparatur.

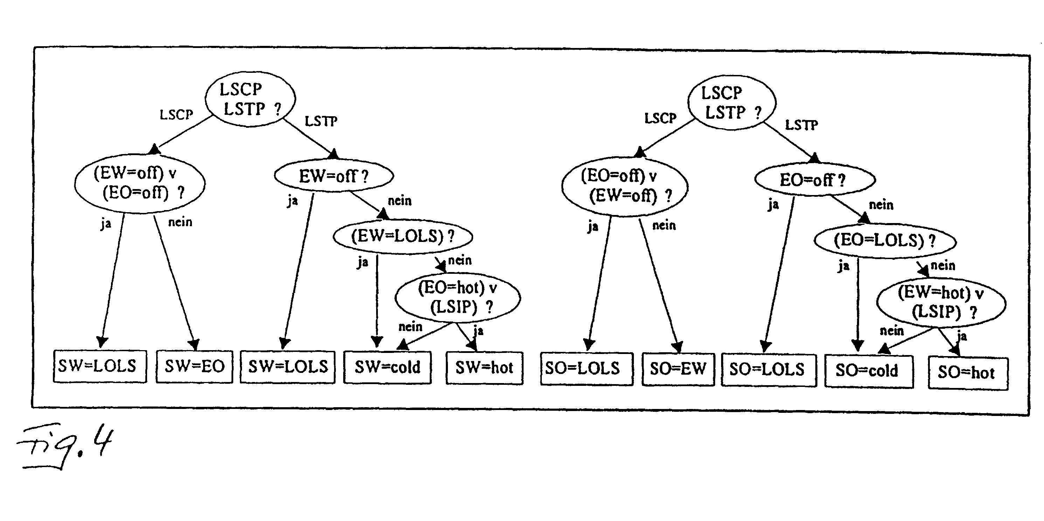

Figur 4 zeigt Ablaufdiagramme für die Erzeugung der über die Prüfsignalsender SO, SW auszusendenden Prüfsignale in Abhängigkeit von durch die Prüfsignalsender EW, EO empfangenen Prüfsignale.

Für einen Durchgangsknoten (LSCP) ist lediglich zu prüfen, ob einer der Prüfsignalempfänger EW oder EO einen Prüfsignalausfall ("off") meldet oder nicht. Ist ein Prüfsignalausfall festgestellt, wird in beiden Richtungen das Signal LOLS gesendet. Haben beide Prüfsignalempfänger EW, EO ein Prüfsignal empfangen, wird das empfangenen Prüfsignal unverändert wieder ausgesandt (SW = EO; SO = EW).

Ist hingegen der Prüfsignalknoten LSX ein Einsetzknoten (LSTP; ein Endknoten (LSIP) ist ein Unterfall eines Einsatzknotens (LSTP)), wird bei einem festgestellten Prüfsignalausfall (beispielsweise EW = off) in die Gegenrichtung das Signal LOLS (SW = LOLS) gesendet. Das gleiche gilt, wenn der Prüfsignalausfall durch den anderen Prüfsignalempfänger EO festgestellt ist. In diesem Fall wird das Prüfsignal LOLS von dem Prüfsignalsender SO ausgesandt.

Wird ein Prüfsignal durch den Prüfsignalempfänger EW, EO empfangen und ist dieses Prüfsignal LOLS, wird in die Gegenrichtung gemäß der obigen Regel das Prüfsignal LS-COLD (SW = cold oder SO = cold) ausgesandt.

Ist das empfangene Prüfsignal nicht LOLS, kann es nur LS-COLD oder LS-HOT sein. Ist das Eingangssignal der anderen Seite LS-HOT oder der Prüfsignalknoten ein Endknoten (LSIP), wird in Gegenrichtung das Prüfsignal LS-HOT gesendet, andernfalls LS-COLD.

Die oben als Beispiel angegebenen Bitmuster für die Prüfsignale LS-HOT und LS-COLD haben den Vorteil, daß eine Verwechselung der beiden Prüfsignale nur schwer möglich ist.

Die Steuerung der Schutzmaßnahmen wird vorzugsweise so eingestellt, daß im Zustand LS-HOT nur wenige andere Bitmuster (LOLS) ausreichen, um einen Alarm an den Steuerrechner abzusetzen. Im Zustand LS-COLD wird ein Alarm erst nach einer viel größeren Anzahl falsch empfangener Prüfsignal-Bitmuster gemeldet. Dadurch kann vermieden werden, daß im Zustand LS-COLD kurzzeitig auftretende Fehler zu einem Alarm in der Zentralsteuerung des Netzwerks führen.

Wird die Übertragungskapazität des Prüfsignalkanals hinreichend groß gewählt, z.B. zwei MBit/s, so können neben den hier beschriebenen Prüfsignalen auch andere Daten zur Steuerung und zur Überwachung unabhängig von den Prüfsignalen selbst übertragen werden.

Für das erfindungsgemäße Prüfsignalkonzept ist es nicht von Bedeutung, wieviele Wellenlängen beispielsweise im Wellenlängen-Multiplex gleichzeitig über eine Faser übertragen werden, da jedem Wellenlängenkanal ein eigenes Prüfsignal zugeordnet wird. Jede Wellenlänge ist somit mit einem eigenen Ersatz-Leitungsweg schützbar.

Die dargestellten Schutzmaßnahmen werden erfindungsgemäß lokal, beispielsweise durch die Koppelknotenrechner, gesteuert, so daß die zentrale Steuerung des Netzwerks und der Operator nicht an akuten Umschaltmaßnahmen beteiligt sind.

## Patentansprüche

1. Verfahren zur Übertragung von optischen Nutzsignalen über eine optische Übertragungseinrichtung zwischen einer ersten Signalquelle oder Signalsenke (TxRx) und einer zweiten Signalquelle oder Signalsenke (TxRx), wobei die optische Übertragungseinrichtung auf mindestens einem Teil ihrer Länge mindestens einen Regelabschnitt (4-5, 1'-4', 3'-6') und mindestens einen parallel verlaufenden Ersatzabschnitt (7-10, 7'-8', 9'-10') aufweist, wobei mindestens zwei Koppelknoten (OCC1, OCC2, OCC3, OCC4, OCC1', OCC2', OCC3') vorgesehen sind, die den mindestens einen Regelabschnitt (4-5, 1'-4', 3'-6') und den mindestens einen Ersatzabschnitt (7-10, 7'-8', 9'-10') der optischen Übertragungseinrichtung und die ersten und zweiten Signalquellen oder Signalsenken (TxRx) miteinander verbinden, wobei durch mindestens zwei Koppelknoten (OCC2, OCC4, OCC2') zusätzlich eine Umschaltung zwischen dem mindestens einen Regelabschnitt und dem mindestens einen Ersatzabschnitt (7-10, 7'-8', 9'-10') vornehmbar ist, mit folgenden Merkmalen:
- neben den optischen Nutzsignalen werden abschnittsweise optische Prüfsignale durch Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') erzeugt, empfangen und erkannt sowie übe die optische Übertragungseinrichtung übertragen, wobei mindestens zwei Prüfsignalknoten (LS4, LS5, LS1', LS3', LS4', LS6') an den Enden des Regelabschnitts (4-5, 1'-4', 3'-6') und mindestens zwei Prüfsignalknoten (LS7, LS10, LS1', LS6', LS7', LS8') an den Enden des Ersatzabschnitts (7-10, 7'-8', 9'-10') angeordnet sind,
- es werden wenigstens eine erste Art (LS-HOT), eine zweite Art (LS-COLD) und eine dritte Art (LOLS) von Prüfsignalen erzeugt und übertragen sowie beim Empfang erkannt, wobei bei einem Empfang eines Prüfsignals dritter Art (LOLS) durch einen der mindestens vier Prüfsignalknoten (LS4, LS5, LS1', LS3', LS4', LS6', LS7, LS10, LS1', LS6', LS7', LS8') eine Störung der optischen Übertragungseinrichtung erkannt wird,
wobei
- eine Umschaltung des mit dem nächstliegenden Prüfsignalknoten (LS4, LS5, LS1', LS3', LS4', LS6') verbunden Koppelknotens (OCC2, OCC4, OCC2') von einem Regelabschnitt (4-5, 1'-4', 3'-6') auf einen Ersatzabschnitt (7-10, 7'-8', 9'-10') nur dann vorgenommen wird, wenn mit dem nächstliegenden Prüfsignalknoten (LS4, LS5, LS1', LS3', LS4', LS6') des Regelabschnitts unmittelbar vor dem Empfang eines Prüfsignals dritter Art (LOLS) ein Prüfsignal erster Art (LS-HOT) empfangen wurde, und bei einer erkannten Störung auf einem Ersatz- oder Regelabschnitt auf allen anderen Abschnitten ein Prüfsignal der zweiten Art (LS-COLD) übermittelt wird.

2. Verfahren nach Anspruch 1, **dadurch gekennzeichnet, dass** die Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') als Durchgangsknoten (LSCP), Einsetzknoten (LSTP) oder Endknoten (LSIP) konfigurierbar sind.

3. Verfahren nach einem der Ansprüche 1 oder 2, **dadurch gekennzeichnet, dass** in allen Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') auszusendende Prüfsignale in Abhängigkeit von empfangenen Prüfsignalen gebildet werden.

4. Verfahren nach einem der Ansprüche 1 bis 3, **dadurch gekennzeichnet, dass** die Aussendung von Prüfsignalen durch die Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') mit einer übergeordneten Steuerung beeinflussbar ist.

5. Verfahren nach einem der Ansprüche 1 bis 4, **dadurch gekennzeichnet, dass** die Konfiguration der Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') über die übergeordnete Steuerung vorgenommen wird.

6. Verfahren nach einem der Ansprüche 1 bis 5, **dadurch gekennzeichnet, dass** eine Information (EmpfO, EmpfW) über die empfangenen Prüfsignale von den Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') an die übergeordnete Steuerung abgegeben wird.

7. Verfahren nach einem der Ansprüche 4 bis 6, **dadurch gekennzeichnet, dass** die übergeordnete Steuerung der dem Prüfsignalknoten (LS4, LS5, LS1', LS3', LS4', LS6', LS7, LS10, LS1', LS6', LS7', LS8') benachbarte Koppelknoten (OCC2, OCC4, OCC2') verwendet wird.

8. Verfahren nach einem der Ansprüche 1 bis 7, **dadurch gekennzeichnet, dass** die Übertragung der optischen Nutzsignale bidirektional erfolgt.

9. Verfahren nach einem der Ansprüche 1 bis 8, **dadurch gekennzeichnet, dass** die Übertragung der optischen Prüfsignale (LS-HOT, LS-COLD, LOLS) bidirektional erfolgt.

10. Verfahren nach Anspruch 8, **dadurch gekennzeichnet, dass** für die Übertragung der optischen Nutzsignale in beiden Übertragungsrichtungen (O, W) separate optische Leitungsfasern verwendet werden.

11. Verfahren nach Anspruch 8, 9 oder 10, **dadurch gekennzeichnet, dass** die Übertragung der Prüfsignale in beide Übertragungsrichtungen (O, W,) zusammen mit der Übertragung der Nutzsignale in die betreffende Richtung erfolgt.

12. Verfahren nach einem der Ansprüche 8 bis 11, **dadurch gekennzeichnet, dass** auf jedem Abschnitt der optischen Übertragungseinrichtung in jede Richtung (O, W) eine Mehrzahl von Nutzsignalen im Multiplex-Verfahren übermittelt wird und jedem übertragenen Nutzsignal eine eigenes Prüfsignal (LS-HOT, LS-COLD, LOLS) zugeordnet wird.

13. Verfahren nach einem der Ansprüche 1 bis 12, **dadurch gekennzeichnet, dass** mittels eines Prüfsignalpegeldetektors des Prüfsignalknotens (LS1, LS2, LS3, LS4, LS5, LS6, LS7, LS8, LS9, LS10, LS1', LS2', LS3', LS4', LS5', LS6', LS7', LS8', LS9', LS10') bei Unterschreiten eines Pegels des Prüfsignals ein Zustand "Prüfsignal nicht vorhanden" erkannt wird, wobei durch den Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') daraufhin in mindestens eine Richtung (O, W) ein Prüfsignal dritter Art (LOLS) ausgesendet wird.

14. Optisches Leitungsnetzwerk mit mindestens zwei optischen Signalquellen oder optischen Signalsenken (TxRx), mit einer optischen Übertragungseinrichtung, wobei die optische Übertragungseinrichtung auf mindestens einem Teil ihrer Länge mindestens einen Regelabschnitt (4-5, 1'-4', 3'-6') und mindestens einen parallel verlaufenden Ersatzabschnitt (7-10, 7'-8', 9'-10') aufweist, mit mindestens zwei Koppelknoten (OCC1, OCC2, OCC3, OCC4, OCC1', OCC2', OCC3') und mit mindestens vier Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10'), mit folgenden Merkmalen:
- zwischen einer ersten optischen Signalquelle oder Signalsenke (TxRx) und einer zweiten optischen Signalquelle oder Signalsenke (TxRx) ist die optische Übertragungseinrichtung angeordnet,
- der mindestens eine Regelabschnitt (4-5, 1'-4', 3'-6') und der mindestens eine Ersatzabschnitt (7-10, 7'-8', 9'-10') der optischen Übertragungseinrichtung und die mindestens zwei optischen Signalquellen und Signalsenken (TxRx) sind über die mindestens zwei Koppelknoten (OCC1, OCC2, OCC3, OCC4, OCC1', OCC2', OCC3') miteinander verbunden,
- mindestens zwei der Koppelknoten (OCC2, OCC4, OCC2') sind derart ausgebildet, dass der mindestens eine Regelabschnitt (4-5, 1'-4', 3'-6') durch Umschaltung der Koppelknoten (OCC2, OCC4, OCC2') auf den mindestens einen Ersatzabschnitt (7-10, 7'-8', 9'-10') überbrückt wird,
- der mindestens eine Regelabschnitt (4-5, 1'-4', 3'-6') und der mindestens eine Ersatzabschnitt (7-10, 7'-8', 9'-10') weisen an ihren Enden jeweils einen der mindestens vier Prüfsignaiknoten (LS4, LS5, LS1', LS3', LS4', LS6', LS7, LS10, LS1', LS6', LS7', LS8') auf,
- die Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') weisen einen Prüfsignalgenerator zur Erzeugung wenigstens einer ersten Art (LS-HOT), einer zweiten Art (LS-COLD) und einer dritten Art (LOLS) von Prüfsignalen auf,
- die Prüfsignalknoten weisen einen Prüfsignalempfänger auf, so dass die Prüfsignale erster Art (LS-HOT), zweiter Art (LS-COLD) und dritter Art (LOLS) empfangbar und erkennbar sind,
wobei
- die Koppelknoten (OCC2, OCC4, OCC2') mit Umschaltmöglichkeiten nur dann die Umschaltung zwischen dem mindestens einen Regelabschnitt (4-5, 1'-4' 3'-6') und dem mindestens einen Ersatzabschnitt (7-10, 7'-8', 9'-10') der optischen Übertragungseinrichtung vornehmen, wenn mittels des Prüfsignalempfängers des nächstgelegenen und mit dem Koppelknoten (OCC2, OCC4, OCC2') in Verbindung stehenden Prüfsignalknoten (LS4, LS5, LS1', LS3', LS4', LS6', LS7, LS10, LS1', LS6', LS7', LS8') ein Prüfsignal dritter Art (LOLS) unmittelbar im Anschluss an ein Prüfsignal erster Art (LS-HOT) detektiert wurde, und
wobei bei einer erkannten Störung auf einem Ersatz- oder Regelabschnitt auf allen anderen Abschnitten ein Prüfsignal der zweiten Art (LS-COLD) übermittelt wird.

15. Optisches Leitungsnetzwerk nach Anspruch 14, **dadurch gekennzeichnet, dass** die Prüfsignalknoten (LS1, LS2, LS3, LS4, LS5, LS6, LS7, LS8, LS9, LS10, LS1', LS2', LS3', LS4 ', LS5', LS6', LS7', LS8', LS9', LS10') in beiden Leitungsrichtungen (O, W) Prüfsignalempfänger (EO, EW) und Prüfsignalgeneratoren (SO, SW) aufweisen.

16. Optisches Leitungsnetzwerk nach Anspruch 14 oder 15, **dadurch gekennzeichnet, dass** die Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') durch eine übergeordnete Steuerung als Durchgangsknoten (LSCP), Einsetzknoten (LSTP) oder Endknoten (LSIP) konfigurierbar sind.

17. Optisches Leitungsnetzwerk nach einem der Ansprüche 14 bis 16, **dadurch gekennzeichnet, dass** die Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') Signalverbindungen zu einer übergeordneten Steuerung aufweisen.

18. Optisches Leitungsnetzwerk nach Anspruch 17, **dadurch gekennzeichnet, dass** die Prüfsignalgeneratoren der Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') über die Signalverbindung durch die übergeordnete Steuerung steuerbar sind.

19. Optisches Leitungsnetzwerk nach einem der Ansprüche 17 und 18, **dadurch gekennzeichnet, dass** die übergeordnete Steuerung einen Teil eines benachbarten Koppelknotens (OCC2, OCC4, OCC2') bildet.

20. Optisches Leitungsnetzwerk nach einem der Ansprüche 14 bis 19, **dadurch gekennzeichnet, dass** die Prüfsignalempfänger (EO, EW) der Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') mit einem Prüfsignalpegeldetektor ausgestattet sind, der ein Unterschreiten eines Pegels des Prüfsignals als Zustand "Prüfsignal nicht vorhanden" erkennt, wobei durch den Prüfsignalknoten (LS1, LS2, LS3, LS4, LS5, LS6, LS7, LS8, LS9, LS10, LS1', LS2', LS3', LS4', LS5', LS6', LS7', LS8', LS9', LS10') daraufhin in mindestens eine Richtung (O, W) ein Prüfsignal dritter Art (LOLS) aussendbar ist.

## Claims

1. Method for transmitting optical useful signals via an optical transmission device between a first signal source or signal sink (TxRx) and a second signal source or signal sink (TxRx), the optical transmission device having on at least a part of its length at least one regulating section (4-5, 1'-4', 3'-6') and at least one standby section (7-10, 7'-8', 9'-10') running in parallel, at least two coupling nodes (OCC1, OCC2, OCC3, OCC4, OCC1', OCC2', OCC3') being provided which interconnect the at least one regulating section (4-5, 1'-4', 3'-6') and the at least one standby section (7-10, 7'-8', 9'-10') of the optical transmission device and the first and second signal sources or signal sinks (TxRx), at least two coupling nodes (OCC2, OCC4, OCC2') additionally being capable of performing a switchover between the at least one regulating section and the at least one standby section (7-10, 7'-8', 9'-10'), having the following features:
- in addition to the optical useful signals, optical test signals are generated in sections by test signal nodes (LS1, LS2, LS3, LS4, LS5, LS6, LS7, LS8, LS9, LS10, LS1', LS2', LS3', LS4', LS5', LS6', LS7', LS8', LS9', LS10'), received and detected as well as transmitted via the optical transmission device, at least two test signal nodes (LS4, LS5, LS1', LS3', LS4', LS6') being arranged at the ends of the regulating section (4-5, 1'-4', 3'-6'), and at least two test signal nodes (LS7, LS10, LS1', LS6', LS7', LS8') being arranged at the ends of the standby section (7-10, 7'-8', 9'-10'),
- at least a first type (LS-HOT), a second type (LS-COLD) and a third type (LOLS) of test signals are generated and transmitted as well as detected during reception, a disturbance of the optical transmission device being detected by one of the at least four test signal nodes (LS4, LS5, LS1', LS3', LS4', LS6', LS7, LS10, LS1', LS6', LS7', LS8') when a test signal of the third type (LOLS) is received,
wherein
- a switchover of the coupling node (OCC2, OCC4, OCC2') connected to the nearest test signal node (LS4, LS5, LS1', LS3', LS4', LS6') from a regulating section (4-5, 1'-4', 3'-6') to a standby section (7-10, 7'-8', 9'-10') is undertaken only when a test signal of the first type (LS-HOT) has been received with the aid of the nearest test signal node (LS4, LS5, LS1', LS3', LS4', LS6') of the regulating section immediately before the reception of a test signal of third type (LOLS), and
a test signal of the second type (LS-COLD) is transferred on all other sections when a disturbance is detected on a standby or regulating section.

2. Method according to Claim 1, **characterized in that** the test signal nodes (LS1, LS2, LS3, LS4, LS5, LS6, LS7, LS8, LS9, LS10, LS1', LS2', LS3', LS4', LS5', LS6', LS7', LS8', LS9', LS10') can be configured as transit nodes (LSCP), inception nodes (LSTP) or final nodes (LSIP).

3. Method according to one of Claims 1 or 2, **characterized in that** test signals to be emitted are formed in all test signal nodes (LS1, LS2, LS3, LS4, LS5, LS6, LS7, LS8, LS9, LS10, LS1', LS2', LS3', LS4', LS5', LS6', LS7', LS8', LS9', LS10') as a function of received first signals.

4. Method according to one of Claims 1 to 3, **characterized in that** the emission of test signals by the test signal nodes (LS1, LS2, LS3, LS4, LS5, LS6, LS7, LS8, LS9, LS10, LS1', LS2', LS3', LS4', LS5', LS6', LS7', LS8', LS9', LS10') can be influenced with the aid of a higher-level controller.

5. Method according to one of Claims 1 to 4, **characterized in that** the configuration of the test signal nodes (LS1, LS2, LS3, LS4, LS5, LS6, LS7, LS8, LS9, LS10, LS1', LS2', LS3', LS4', LS5', LS6', LS7', LS8', LS9', LS10') is undertaken via the higher-level controller.

6. Method according to one of Claims 1 to 5, **characterized in that** an item of information (EmpfO, EmpfW) about the received test signals is output by the test signal nodes (LS1, LS2, LS3, LS4, LS5, LS6, LS7, LS8, LS9, LS10, LS1', LS2', LS3', LS4', LS5', LS6', LS7', LS8', LS9', LS10') to the higher-level controller.

7. Method according to one of Claims 4 to 6, **characterized in that** the higher-level controller of the coupling nodes (OCC2, OCC4, OCC2') adjacent to the test signal node (LS4, LS5, LS1', LS3', LS4', LS6', LS7, LS10, LS1', LS6', LS7', LS8') is used.

8. Method according to one of Claims 1 to 7, **characterized in that** the transmission of the optical useful signals is performed bidirectionally.

9. Method according to one of Claims 1 to 8, **characterized in that** the transmission of the optical test signals (LS-HOT, LS-COLD, LOLS) is performed bidirectionally.

10. Method according to Claim 8, **characterized in that** separate optical line fibres are used for transmitting the optical useful signals in the two transmission directions (O, W).

11. Method according to Claim 8, 9 or 10, **characterized in that** the transmission of the test signals in the two transmission directions (O, W) is performed together with the transmission of the useful signals in the relevant direction.

12. Method according to one of Claims 8 to 11, **characterized in that** a plurality of useful signals are transferred on each section of the optical transmission device in each direction (O, W) using the multiplexing method, and a dedicated test signal (LS-HOT, LS-COLD, LOLS) is assigned to each transmitted useful signal.

13. Method according to one of Claims 1 to 12, **characterized in that** upon undershooting of a level of the test signal a state of "test signal not present" is detected by means of a test signal level detector of the test signal node (LS1, LS2, LS3, LS4, LS5, LS6, LS7, LS8, LS9, LS10, LS1', LS2', LS3', LS4', LS5', LS6', LS7', LS8', LS9', LS10'), a test signal of the third type (LOLS) being emitted thereupon in at least one direction (O, W) by the test signal node (LS1, LS2, LS3, LS4, LS5, LS6, LS7, LS8, LS9, LS10, LS1', LS2', LS3', LS4', LS5', LS6', LS7', LS8', LS9', LS10').

14. Optical line network having at least two optical signal sources or optical signal sinks (TxRx) and having an optical transmission device, the optical transmission device having on at least a part of its length at least one regulating section (4-5, 1'-4', 3'-6') and at least one standby section (7-10, 7'-8', 9'-10') running in parallel, having at least two coupling nodes (OCC1, OCC2, OCC3, OCC4, OCC1', OCC2', OCC3') and having at least four test signal nodes (LS1, LS2, LS3, LS4, LS5, LS6, LS7, LS8, LS9, LS10, LS1', LS2', LS3', LS4', LS5', LS6', LS7', LS8', LS9', LS10'), having the following features:
- the optical transmission device is arranged between a first optical signal source or signal sink (TxRx) and a second optical signal source or signal sink (TxRx),
- the at least one regulating section (4-5, 1'-4', 3'-6') and the at least one standby section (7-10, 7'-8', 9'-10') of the optical transmission device and the at least two optical signal sources and signal sinks (TxRx) are interconnected via the at least two coupling nodes (OCC1, OCC2, OCC3, OCC4, OCC1', OCC2', OCC3'),
- at least two of the coupling nodes (OCC2, OCC4, OCC2') are designed in such a way that the at least one regulating section (4-5, 1'-4', 3'-6') is bridged by switching over the coupling nodes (OCC2, OCC4, OCC2') to the at least one standby section (7-10, 7'-8', 9'-10'),
- the at least one regulating section (4-5, 1'-4', 3'-6') and the at least one standby section (7-10, 7'-8', 9'-10') respectively have at their ends one of the at least four test signal nodes (LS4, LS5, LS1', LS3', LS4', LS6', LS7, LS10, LS1', LS6', LS7', LS8'),
- the test signal nodes (LS1, LS2, LS3, LS4, LS5, LS6, LS7, LS8, LS9, LS10, LS1', LS2', LS3', LS4', LS5', LS6', LS7', LS8', LS9', LS10') have a test signal generator for generating at least a first type (LS-HOT), a second type (LS-COLD) and a third type (LOLS) of test signals, and
- the test signal nodes have a test signal receiver such that the test signals of the first type (LS-HOT), second type (LS-COLD) and third type (LOLS) can be received and can be detected,
wherein
- the coupling nodes (OCC2, OCC4, OCC2') with switchover options perform the switchover between the at least one regulating section (4-5, 1'-4', 3'-6') and the at least one standby section (7-10, 7'-8', 9'-10') of the optical transmission device only when a test signal of the third type (LOLS) has been detected by means of the test signal receiver of the nearest test signal node (LS4, LS5, LS1 LS3', LS4', LS6', LS7, LS10, LS1', LS6', LS7', LS8') connected to the coupling node (OCC2, OCC4, OCC2') directly following a test signal of the first type (LS-HOT), and
wherein a test signal of the second type (LS-COLD) is transferred on all other sections when a disturbance is detected on a standby or regulating section.

15. Optical line network according to Claim 14, **characterized in that** the test signal nodes (LS1, LS2, LS3, LS4, LS5, LS6, LS7, LS8, LS9, LS10, LS1', LS2', LS3', LS4', LS5', LS6', LS7', LS8', LS9', LS10') have test signal receivers (EO, EW) and test signal generators (SO, SW) in the two line directions (O, W).

16. Optical line network according to Claim 14 or 15, **characterized in that** the test signal nodes (LS1, LS2, LS3, LS4, LS5, LS6, LS7, LS8, LS9, LS10, LS1', LS2', LS3', LS4', LS5', LS6', LS7', LS8', LS9', LS10') can be configured as transit nodes (LSCP), inception nodes (LSTP) or final nodes (LSIP) by a higher-level controller.

17. Optical line network according to one of Claims 14 to 16, **characterized in that** the test signal nodes (LS1, LS2, LS3, LS4, LS5, LS6, LS7, LS8, LS9, LS10, LS1', LS2', LS3', LS4', LS5', LS6', LS7', LS8', LS9', LS10') have signal connections to a higher-level controller.

18. Optical line network according to Claim 17, **characterized in that** the test signal generators of the test signal nodes (LS1, LS2, LS3, LS4, LS5, LS6, LS7, LS8, LS9, LS10, LS1', LS2', LS3', LS4', LS5', LS6', LS7', LS8', LS9', LS10') can be controlled by the higher-level controller via the signal connection.

19. Optical line network according to one of Claims 17 and 18, **characterized in that** the higher-level controller forms a part of an adjacent coupling node (OCC2, OCC4, OCC2').

20. Optical line network according to one of Claims 14 to 19, **characterized in that** the test signal receivers (EO, EW) of the test signal nodes (LS1, LS2, LS3, LS4, LS5, LS6, LS7, LS8, LS9, LS10, LS1', LS2', LS3', LS4', LS5', LS6', LS7', LS8', LS9', LS10') are equipped with a test signal level detector which detects an undershooting of a level of the test signal as a state of "test signal not present", a test signal of the third type (LOLS) being capable of being emitted thereupon in at least one direction (O, W) by the test signal node (LS1, LS2, LS3, LS4, LS5, LS6, LS7, LS8, LS9, LS10, LS1', LS2', LS3', LS4', LS5', LS6', LS7', LS8', LS9', LS10').

## Revendications

1. Procédé de transmission de signaux optiques utiles par une installation de transmission optique entre une première source de signaux ou puits de signaux (TxRx) et une seconde source de signaux ou puits de signaux (TxRx), l'installation de transmission optique ayant sur au moins une partie de sa longueur au moins un segment de régulation (4-5, 1'-4', 3'-6') et au moins un segment de remplacement (7-10, 7'-8', 9'-10') parallèle,
avec au moins deux noeuds de couplage (OCC1, OCC2, OCC3, OCC4, OCC1', OCC2', OCC3'), reliant l'au moins un segment de régulation (4-5, 1'-4', 3'-6') et l'au moins un segment de remplacement (7-10, 7'-8', 9'-10') de l'installation de transmission optique et la première et la seconde source de signaux ou puits de signaux (TxRx) entre eux,
et au moins deux noeuds de couplage (OCC2, OCC4, OCC2'), assurant en plus une commutation entre au moins un segment de régulation et au moins un segment de remplacement (7-10, 7'-8', 9'-10'), ayant les caractéristiques suivantes :
- à côté des signaux optiques utiles, on génère, reçoit et reconnaît des signaux optiques de contrôle par les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10') et on les transmet par l'installation de transmission optique, au moins deux noeuds de signaux de contrôle (LS4, LS5, LS1', LS3', LS4', LS6') étant prévus aux extrémités des segments de régulation (4-5, 1'-4', 3'-6') et au moins deux noeuds de signaux de contrôle (LS7, LS10, LS1', LS6', LS7', LS8') étant prévus aux extrémités du segment de remplacement (7-10, 7'-8', 9'-10'),
- et on génère au moins un premier type (LS-HOT), un second type (LS-COLD) et un troisième type (LOLS) de signaux de contrôle et on les transmet et on les reconnaît à la réception, et à la réception d'un signal de contrôle du troisième type (LOLS) par au moins l'un des quatre noeuds de signaux de contrôle (LS4, LS5, LS1', LS3', LS4', LS6', LS7, LS10, LS1', LS6', LS7', LS8'), on estime que l'installation de transmission optique est perturbée,
procédé selon lequel
- une commutation du noeud de couplage (OCC2, OCC4, OCC2') reliée au noeud de signaux de contrôle le plus proche (LS4, LS5, LS1', LS3', LS4', LS6') est effectuée par un segment de régulation (4-5, 1'-4' 3'-6') sur un premier segment de remplacement (7-10, 7'-8', 9'-10') seulement si avec le noeud de signaux de contrôle le plus proche (LS4, LS5, LS1', LS3', LS4', LS6') du segment de régulation, directement avant la réception du signal de contrôle de troisième type (LOLS), on a reçu un signal de contrôle du premier type (LS-HOT), et lorsqu'on a détecté une perturbation sur un segment de remplacement ou de régulation, on transmet à tous les autres segments un signal de contrôle du second type (LS-COLD).

2. Procédé selon la revendication 1,
**caractérisé en ce que**
les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), sont configurés comme des noeuds de passage (LSCP), des noeuds d'insertion (LSTP) ou des noeuds d'extrémité (LSIP).

3. Procédé selon l'une quelconque des revendications 1 ou 2,
**caractérisé en ce que**
dans tous les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), on forme les signaux de contrôle à émettre en fonction des signaux de contrôle reçus.

4. Procédé selon l'une quelconque des revendications 1 à 3,
**caractérisé en ce que**
l'émission des signaux de contrôle par les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), peut être influencée par une commande supra-ordonnée (d'ordre supérieur).

5. Procédé selon l'une quelconque des revendications 1 à 4,
**caractérisé en ce que**
la configuration des noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), se fait par une commande supra-ordonnée.

6. Procédé selon l'une quelconque des revendications 1 à 5,
**caractérisé en ce que**
l'information (EmpfO, EmpfW) est émise par les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), à partir des signaux de contrôle reçus vers la commande supra-ordonnée.

7. Procédé selon l'une quelconque des revendications 4 à 6,
**caractérisé en ce qu'**
on utilise la commande supra-ordonnée des noeuds de couplage (OCC2, OCC4, OCC2'), voisins des noeuds de signaux de contrôle (LS4, LS5, LS1', LS3', LS4', LS6', LS7, LS10, LS1', LS6', LS7', LS8').

8. Procédé selon l'une quelconque des revendications 1 à 7,
**caractérisé en ce que**
la transmission des signaux optiques utiles est bi-directionnelle.

9. Procédé selon l'une quelconque des revendications 1 à 8,
**caractérisé en ce que**
la transmission des signaux de contrôle optiques (LS-HOT, LS-COLD, LOLS) est bi-directionnelle.

10. Procédé selon la revendication 8,
**caractérisé en ce que**
la transmission des signaux optiques utiles dans les deux directions de transmission (O, W) se fait avec des fibres optiques distinctes.

11. Procédé selon l'une quelconque des revendications 8, 9, ou 10
**caractérisé en ce que**
la transmission des signaux de contrôle dans les deux directions de transmission (O, W) se fait avec la transmission des signaux utiles dans la direction concernée.

12. Procédé selon l'une quelconque des revendications 8 à 11,
**caractérisé en ce que**
sur chaque segment de l'installation de transmission optique dans chaque direction (O, W) on transmet plusieurs signaux utiles en procédure multiplex et à chaque signaux utiles transmis on associe son propre signal de contrôle (LS-HOT, LS-COLD, LOLS).

13. Procédé selon l'une quelconque des revendications 1 à 12,
**caractérisé en ce qu'**
à l'aide d'un détecteur de niveau de signal de contrôle du noeud de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), lorsqu'on passe en dessous d'un niveau du signal de contrôle, on constate l'état « signal de contrôle absent » et ensuite on envoie dans au moins une direction (O, W) un signal de contrôle de troisième type (LOLS) par les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10').

14. Réseau de lignes optiques composé d'au moins deux sources de signaux optiques ou puits de signaux optiques (TxRx) ayant une installation de transmission optique, cette installation de transmission optique ayant sur au moins une partie de sa longueur au moins un segment de régulation (4-5, 1'-4', 3'-6') et au moins un segment de remplacement (7-10, 7'-8', 9'-10'), parallèle, avec au moins deux noeuds de couplage (OCC1, OCC2, OCC3, OCC4, OCC1', OCC2', OCC3') et au moins quatre noeuds de signaux de contrôle (LS1, LS2, LS3, LS4, LS5, LS6, LS7, LS8, LS9, LS10, LS1', LS2', LS3', LS4', LS5', LS6', LS7', LS8'. LS9', LS10') ayant les caractéristiques suivantes :
- entre une première source de signaux optiques ou puits de signaux (TxRx) et une seconde source ou puits de signaux optiques (TxRx) on a une installation de transmission optique,
- au moins un segment de régulation (4-5, 1'-4', 3'-6') et au moins un segment de remplacement (7-10, 7'-8', 9'-10') de l'installation de transmission optique et au moins deux sources de signaux optiques et puits de signaux optiques (TxRx) sont reliés par au moins deux noeuds de couplage (OCC1, OCC2, OCC3, OCC4, OCC1', OCC2', OCC3'),
- au moins deux noeuds de couplage (OCC2, OCC4, OCC2') sont réalisés pour qu'au moins un segment de régulation (4-5, 1'-4', 3'-6') soit court-circuité par commutation des noeuds de couplage (OCC2, OCC4, OCC2') sur au moins un segment de remplacement (7-10, 7'-8', 9'-10'),
- au moins un segment de régulation (4-5, 1'-4', 3'-6') et au moins un premier segment de remplacement (7-10, 7'-8', 9'-10') ont à leur extrémité chaque fois l'un des au moins quatre noeuds de signaux de contrôle (LS4, LS5, LS1', LS3', LS4', LS6', LS7, LS10, LS1', LS6', LS7', LS8'),
- les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), ont un générateur de signaux de contrôle pour générer au moins un signal de contrôle du premier type (LS-HOT), un signal de contrôle du second type (LS-COLD) et un signal de contrôle du troisième type (LOLS),
- les noeuds de signaux de contrôle ont un récepteur de signaux de contrôle permettant de recevoir et de reconnaître les signaux de contrôle du premier type (LS-HOT), du second type (LS-COLD) et du troisième type (LOLS),
dispositif dans lequel
- les noeuds de couplage (OCC2, OCC4, OCC2') ayant les possibilités de commutation, effectuent la commutation entre au moins un segment de régulation (4-5, 1'-4', 3'-6') et au moins un segment de remplacement (7-10, 7'-8', 9'-10'), de l'installation de transmission optique, seulement si le récepteur de signaux de contrôle du noeud de signaux de contrôle (LS4, LS5, LS1', LS3', LS4', LS6', LS7, LS10, LS1', LS6', LS7', LS8'), en liaison avec le noeud de couplage (OCC2, OCC4, OCC2') le plus proche, a détecté un signal de contrôle du troisième type (LOLS) directement en liaison avec un signal de contrôle du premier type (LS-HOT), et
- lorsqu'une perturbation est reconnue, on transmet sur un segment de remplacement ou de régulation un signal de contrôle du second type (LS-COLD) vers tous les autres segments.

15. Réseau de lignes optiques selon la revendication 14,
**caractérisé en ce que**
les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10') ont des récepteurs de signaux de contrôle (EO, EW), des générateurs de signaux de contrôle (SO, SW) dans les deux directions des lignes (O, W).

16. Réseau de lignes optiques selon l'une quelconque des revendications 14 ou 15,
**caractérisé en ce que**
les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), sont configurés par une commande supra-ordonnée comme noeuds de passage (LSCP), comme noeuds d'insertion (LSTP) ou comme noeuds d'extrémité (LSIP).

17. Réseau de lignes optiques selon l'une quelconque des revendications 14 à 16,
**caractérisé en ce que**
les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), ont des liaisons de signaux vers une commande supra-ordonnée.

18. Réseau de lignes optiques selon la revendication 17,
**caractérisé en ce que**
les générateurs de signaux de contrôle des noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), sont commandés par la commande supra-ordonnée par l'intermédiaire des liaisons de signaux.

19. Réseau de lignes optiques selon l'une quelconque des revendications 17 et 18,
**caractérisé en ce que**
la commande supra-ordonnée constitue une partie d'un noeud de couplage voisin (OCC2, OCC4, OCC2').

20. Réseau de lignes optiques selon l'une quelconque des revendications 14 à 19,
**caractérisé en ce que**
les récepteurs de signaux de contrôle (EO, EW) des noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), sont équipés d'un détecteur de niveau de signaux de contrôle qui reconnaît un dépassement vers le bas d'un niveau du signal de contrôle comme un état correspondant à « absence de signal de contrôle » et les noeuds de signaux de contrôle (LS1, LS2, LS3, LS4, LS5, LS6, LS7, LS8, LS9, LS10, LS1', LS2', LS3', LS4', LS5', LS6', LS7', LS8', LS9', LS10'), envoient ensuite un signal de contrôle du troisième type (LOLS) dans au moins une direction (O, W).
